# EUROPEAN PATENT APPLICATION

(11) **EP 4 657 388 A1**
(43) Date of publication of application: **03.12.2025**
(21) Application number: 24382567.6
(22) Date of filing: 28.05.2024
(51) Int. Cl.: G06V 10/80, G06V 40/40

(54) **COMPUTER-IMPLEMENTED METHOD FOR JOINTLY TRAINING AT LEAST TWO DIFFERENT SPOOF-DETECTION SYSTEMS**

(71) Applicant: Identy Inc., Dover, DE 19901 (US)
(72) Inventor: Vaquero, Carlos, 28013 Madrid (ES)
(74) Representative: Grünecker Patent- und Rechtsanwälte PartG mbB

(57) **Abstract**

A computer-implemented method for jointly training at least two different spoof-detection systems using a single data set, the single data set comprising at least two sub-sets of training data, wherein each sub-set comprises at least two different kinds of training data, the method comprising:
- training, in a first training cycle, the at least two different spoof-detection systems a first sub-set of training data
- determining, based on a result of the training, for each of the at least two different spoof-detection systems, a score for each of the at least two different kinds of training data in the sub-set of training data
- weighting, based on the scores, each kind of training data in a second sub-set of training data to obtain weighted training data
- training, in a subsequent training cycle, the at least two different spoof-detection systems using the weighted training data.

## Description

The present invention concerns a computer-implemented method for jointly training at least two different spoof-detection systems using a single data set according to independent claim 1 and a computer-implemented method for identifying a user according to independent claim 14 as well as a system comprising a sensor for obtaining data comprising audio and/or 2D and/or 3D images and/or video according to claim 15.

### Prior art

With mobile devices like smartphones emerging in the past years, identification of users has changed from entering user credentials like usernames and passwords towards the use of biometric characteristics like fingerprints or face identification to identify the user to grant access to restricted data like stored user credentials and passwords or to log into accounts, like bank accounts.

For example, from EP 3 540 635 B1, a computer-implemented method is known that identifies a biometric characteristic of a user within an image taken. The identified biometric characteristic can be used to identify the user and can be the fingerprint. Identifying the biometric characteristic is achieved using a neural network that processes the obtained image.

In contrast to using passwords and usernames, however, identifying biometric features like a fingerprint or a face of a user will usually be obtained under varying circumstances. For example, the illumination conditions in the surrounding of the user when taking an image can differ depending on the daytime or whether or not flashlight of the mobile device is used to obtain the image. Additionally, user identification may be done using several biometric characteristics from which only some are presented on not moving, static images, but others may depend on evaluating moving images (videos) and/or the voice of a user.

Though biometric characteristics of users as such are indeed individual, data (like images or videos) containing such characteristics can, however, also be spoofed by, for example, holding an image in front of the camera where the image depicts the biometric characteristic or feature like the fingerprint or the face of the user. Such a spoof can be used to get access to the data by a malicious attacker. Alternatively, spoofed videos or spoofed voice recordings can be used by a malicious attacker to obtain access to restricted data by using such spoofs of the real biometric features of a user to fake the identity of the user.

Systems that can detect spoofs are known, for example, from EP 3 540 636 A1. However, such anti-spoof systems or spoof-detection systems are specifically designed and trained for identifying particular spoofs like, for example, spoofs of a voice recording of a user or spoofs of fingerprints exhibited on images.

In order to train such systems, like neural networks, time-consuming training cycles have to be executed with training data that is particularly suited to train a specific anti-spoof system. This is not only time-consuming but also requires a pre-selection and sorting of available training data resulting in substantial at least partially manual work being involved in order to train and/or program the respective anti-spoof systems.

### Object

Starting from the known prior art, it is one object of the present disclosure to provide a computer-implemented method for training different spoof-detection systems in a reliable yet more efficient manner. A further object is to provide systems and methods that allow for reliably and spoof-safe identifying a user using biometric characteristics of a user while improving the user-friendliness.

### Solution

These objects are solved by the computer-implemented method for jointly training at least two different spoof-detection systems according to independent claim 1.

These objects are further addressed by the computer-implemented method for identifying a user according to claim 14 and the system comprising an optical sensor for obtaining data comprising audio data and/or 2D and/or 3D images and or videos according to claim 15. Further preferred embodiments are provided in the dependent claims.

According to the invention, a computer-implemented method for jointly training at least two different spoof-detection systems using a single data set is provided, the single data set comprising at least two sub-sets of training data, wherein each sub-set comprises at least two different kinds of training data, the method comprising:
- training, in a first training cycle, the at least two different spoof-detection systems using a first sub-set of training data
- determining, based on a result of the training, for each of the at least two different spoof-detection systems, a score for each of the at least two different kinds of training data in the first sub-set of training data
- weighting, based on the scores, each kind of training data in a second sub-set of training data to obtain weighted training data
- training, in a subsequent training cycle, the at least two different spoof-detection systems using the weighted training data.

In the context of the present disclosure, a training cycle at least comprises processing the sub-sets of training data by each of the at least two different spoof-detection systems and providing an output that is preferably compared to a predetermined result. For example, if the sub-set of the training data would comprise images of fingers or fingerprints, the result of the processing by the at least two different spoof-detection systems is a determination of whether or not the images contain the real fingerprints or spoofs of the real fingerprints. This result is then compared to known information for each image that indicates whether the image constitutes a spoof or not. Depending on the spoof-detection system, the identification can either be accurate or less accurate, resulting in different scores, which are later on used to weigh the training data.

In this context, the weighed training data can be obtained from the sub-set of training data by associating, depending on the kind of training data, a particular weight based on the scores to this training data, so as to give this particular kind of training data more or less weight when training the at least two different spoof-detection systems. This can encompass that the weight of a particular kind of training data is larger for a first spoof-detection system and smaller for a second spoof-detection system, depending on how the particular spoof-detection systems responded to this kind of training data in a preceding training cycle and consequently depending on the scores previously determined.

The single data set is to be understood as an accumulation of training data, for example, in a database where all the available training data is used to train the at least two different spoof-detection systems. In so far, different kinds of training data are to be understood as referring to at least one of different types of information (for example, either videos or photos or audio data) and/or to different properties, (like for example, different surrounding noises in the case of audio data or different illumination characteristics or the like). Different kinds of training data can additionally or alternatively also be understood as different information, like for example one or more samples in the training data set comprising images of fingerprints whereas others comprise images of eyes. Also a more fine grained differentiation of kinds of training data can be thought of. For example, different orientations, light conditions, colors, sizes or the like of a particular biometric feature (like a fingerprint) in different samples of the sub-set can be associate with different kinds of training data.

It is noted that the first and second sub-sets of training data can be different or the same sub-sets of training data. For example, the same sub-set of training data can be used several times in training in subsequent training cycles until, for example, the training result at the end of a training cycle is good enough (for example shows that the parameters of the to be trained systems do no longer change or change below a given threshold).

Furthermore, while it is referred to sub-sets of training data herein, it is noted that each sub-set can also comprise all available training data. In this particular case, the first and second sub-set will be identical.

The different spoof-detection systems are in any case systems that are suitable to distinguish between real objects, like real images obtained from a face or a finger and spoofs of real objects, like for example, photos held before a camera to take a photo therefrom where the photos show an image of the object.

By jointly training the different spoof-detection systems in the manner according to the above described embodiment, it is possible to simultaneously train different spoof-detection systems, thereby reducing the training time and input required from a user or training supervisor while at the same time achieving high spoof detection accuracy with the spoof-detection systems, particularly when using them jointly later on to identify spoofs. Indeed, during the training, each of the different spoof-detection systems is specialized towards detecting a particular kind of spoof, not only depending on how good the particular spoof-detection system responds to the particular kind of spoof, but also depending on how good or bad other spoof-detection systems jointly trained with the particular spoof-detection system respond to this particular kind of spoof. Thereby, a combination of spoof-detection systems is obtained that can reliably identify different spoofs while being trained efficiently.

In one embodiment, the score is indicative of a spoof-identification accuracy of the spoof-detection system for the kind of training data.

The accuracy can, for example, be determined based on the difference of the result of processing the particular kind of training data by a particular spoof-detection system compared to what predetermined information associated with the training data (for example whether the respective data shows a spoof or not). For example, if the spoof-detection system is to determine the position of a finger in an image and to determine whether the finger in the image constitutes a spoof or the real finger, the predetermined information can indicate the position, for example, as coordinates within the image and a binary information indicating whether the finger is a spoof or a real object. The score can then, for example, be set based on whether the spoof-detection system correctly identifies that the finger is a spoof or a real object and depending on whether the position of the finger is correctly determined. This can encompass determining the pixels showing the finger or comparing a bounding box (its coordinates and shape) enclosing the finger as determined by the spoof-detection system to a bounding box (its coordinates and shape) provided as part of the predetermined information. The score can be weighed based on the accuracy with which binary information, like whether the particular training data constitutes a spoof or real object, is determined and the accuracy with which non-binary information like the position of the finger (coordinates and shape of the bounding box) is determined. It can also be provided that two scores are determined that are used for weighing the training data where a first score is indicative of hard decisions which can be binary (yes or no), and a second score is indicative of the accuracy for determining soft decisions like, for example, the particular position or orientation of a finger. This embodiment allows the taking into account of the behavior of a particular spoof-detection system in weighting the training data.

In one embodiment, the single data set comprises one type of data and the different kinds of data are different properties of the type of data or the single data set comprises different types of data and each different kind of data is a different type of data.

The type of data can specify, for example, the data format where the type of data can in general either be audio data, image data, or video data, like a video stream of arbitrary duration.

The different properties of the type of data can specify characteristics of the data of the particular data type itself. For example, taking an image as the type of data, the properties of the image can specify brightness, color depth, resolution, illumination characteristics or the like. For audio data, for example, the property of the audio data can specify loudness or resolution or whether the audio data encodes two-dimensional or three-dimensional audio data or relates to mono or stereo or Dolby digital audio data.

In the case of a video stream, the properties can, for example, specify a frame rate or resolution or color depth or brightness or illumination properties of the video data.

In the first alternative of the above embodiment, it can be provided that the single data set comprises only one type of data, i.e. exactly one type of data where the different kinds of data only differ with respect to particular properties. For example, taking as type of data images, it can be provided that a first kind of data comprises only images that are black-white images, whereas a second kind of data comprises only images that have a resolution of 512 x 256 pixels or the like and are colored. By training different spoof-detection systems on different properties of a particular type of data, it can be ensured that the spoof detection is reliable also in case of users, for example, taking images of biometric features under different conditions or with different image properties.

The second alternative allows for training different spoof-detection systems even on different kinds of data like audio data and images so that the user is freed from having to identify in a particular way, for example, by photographing his fingers, while the training of the different spoof-detection systems results in a reliable spoof detection when implementing the spoof-detection systems jointly.

It can be provided that training, in the first training cycle and/or the second training cycle, comprises simultaneously training the at least two different spoof-detection systems.

Simultaneously training the at least two different spoof-detection systems is intended to mean that the training is at least partially performed at the same time for at least two of the at least two different spoof-detection systems. This does not necessarily mean that the training has to be concluded at the same time or has to begin at the same time. However, it can be preferred that the simultaneous training at least starts at the same time. With this embodiment, an efficient utilization of available computing time is achieved.

In one embodiment, each training cycle comprises modifying at least one parameter of at least one spoof-detection system.

A parameter of at least one spoof-detection system can be, for example, a parameter of a classifier that is used in the spoof-detection system for distinguishing between spoofs and real objects. The at least one parameter of the at least one spoof-detection system can alternatively or additionally also be a parameter of a neural network that is part of the spoof-detection system and is to be trained with the method. Joint adaption of the spoof-detection systems to the training data is achieved with this embodiment.

It can further be provided that the steps of determining, weighting and training, in a subsequent training cycle, are repeated a predetermined number of times or until a steady state of all spoof-detection systems is reached.

The steady state is to be understood as a state of all spoof-detection systems where a further training cycle would result in negligible modifications to parameters of the spoof-detection systems or where a change of the parameters of the spoof-detection systems from a preceding training cycle to a most recent training cycle is below a particular threshold. This means that further training is unlikely to result in further significant modifications to the parameters of the spoof-detection systems and consequently the training has concluded or cannot be improved further significantly. In that case, training can be stopped.

When repeating the respective steps for only a predetermined number of times, the number of modifications to the parameters are limited. This can result in no steady state of all spoof-detection systems being obtained, but since the spoof-detection systems are jointly trained, their united performance in identifying spoofs can still be sufficient so that the training can be completed after a foreseeable amount of time by only repeating training cycles for a predetermined number of times.

In this context, it is understood that the respective training cycles are preferably not executed with the same weighed training data or second sub-set of training data, but that each training cycle is performed with a sub-set of training data preferably not previously used or that a particular sub-set of training data is only used again for training once all other sub-sets of training data have been used for training. With this, biasing towards identification of spoofs with only a limited variety based on a particular sub-set of training data is avoided.

In one embodiment, weighting comprises comparing the at least one score against a threshold value and, if the score is above the threshold value, determining a weight for the kind of training data and/or if the score is below the threshold value, setting a weight for the kind of training data to 0.

In this context, if the score, for example, is indicative of an accuracy with which the spoof or the real object has been identified with a particular spoof-detection system in a particular training cycle, the threshold can be used to sort the spoof-detection systems according to their accuracy, where further training of a particular spoof-detection system with a particular kind of training data is only performed if the response of this particular spoof-detection system to this kind of training data was at least somehow acceptable. By setting the weights of kinds of training data for a particular spoof-detection system to 0 when the score is below the threshold, such training data will not be used further to train the associated spoof-detection system. Thereby resources are saved for training of a spoof-detection system that would in any case likely result in no reliable spoof detection for a particular kind of training data. This simplifies the training because the training data does not have to be pre-sorted depending on which spoof-detection system is to be trained because the sorting is automatically achieved during the training.

It can be provided that the score comprises a first sub-score indicative of an identification accuracy of a spoof and a second sub-score indicative of an identification accuracy of spoof related information.

The first sub-score may thus be a sub-score that either takes a value of 0 or 1 depending on whether the spoof-detection system correctly determined that a spoof is present or not. The spoof-related information may, for example, comprise the kind of spoof (for example if the spoof consists of presenting a screenshot of a video or a photo of the real object). Alternatively or additionally, the spoof-related information can, for example, also comprise the accuracy with which the position of the relevant object for which it is to be determined that a spoof is present is determined in an image. This second sub-score can indicate a value between 0 and 1, where 0 indicates no accuracy and 1 indicates full accuracy or perfect accuracy. Also another range of values is possible.

The first score and the second score can then be combined by, for example, determining their product or their sum to obtain a combined score that can be used to determine the weights. Using the product for determining the combined score can result in the first sub-score having comparably large weight because if the first sub-score is 0, indicating that the system did not correctly determine that a spoof is present or that the real object is present in the training data, the combined score will be 0 independent from the second sub-score. Thereby more weight can be put on the correct identification of whether or not a spoof is present at all. Using the sum allows for giving the second sub-score a particular weight compared to the first sub-score as the combined score will not be 0 unless both the first and the second sub-score are 0, which allows weighing the training data not only depending on whether the spoof-detection systems are able to determine whether or not a spoof is present but also depending on how accurate the spoof-detection systems understand the training data.

In one embodiment, the at least two spoof-detection systems are pre-trained on at least one kind of training data.

A pre-trained spoof-detection system will be understood in the following either as a specifically designed spoof-detection system that, for example, comprises a particular architecture of a neural network or classifier to perform a spoof detection on the at least one kind of training data and/or a spoof-detection system that has already run through some training procedure where parameters of the spoof-detection system have been trained towards identifying spoofs in a particular kind of training data. Using at least somehow pre-trained spoof-detection systems can result in a more efficient joint training of the at least two spoof-detection systems because progress towards identification of specific kinds of training data can be made faster during the joint training.

Each of the at least two spoof-detection systems can be pre-trained on a kind of training data that is different from the kind of training data on which a different spoof-detection system of the at least two spoof-detection systems is pre-trained.

With this embodiment, it can be ensured that during the joint training the spoof-detection systems will likely develop towards improved identification of pairwise disjoint characteristics of the training data and/or kinds of training data so that at the end of the training procedure the spoof-detection systems are preferably trained to each identify different kinds of the training data with high accuracy.

It can be provided that weighting comprises determining a weight for each kind of training data as a function of all scores.

This embodiment ensures that the joint training does not only take into account the training result of a particular spoof-detection system in a preceding training cycle but also takes into account the behavior of other spoof-detection systems in this preceding training cycle. Thereby, the joint training achieves superior joint training results compared to separate training of spoof-detection systems.

The spoof-detection systems can comprise at least one of an algorithmic classifier, a neural network for detecting spoofs.

These classifiers and/or neural networks will be trained with the method according to any of the preceding embodiments. Algorithmic classifiers and neural networks usually require sophisticated training and jointly training them according to embodiments of the invention can increase the efficiency with which the training is performed.

The scores can be stored in an LUT.

A lookup table, LUT, can further reduce the processing required in the joint training because the scores can be accessed easily and processed during the training. It can be provided that for each training cycle a separate LUT comprising the scores determined in this training cycle is created and stored to allow access to all scores determined during the training.

According to the present disclosure, a computer-implemented method for identifying a user is provided, the method comprising obtaining data comprising a biometric feature of the user, processing the data to determine whether the biometric feature is a spoof using a spoof detector comprising at least two spoof-detection systems trained according to the computer-implemented method according to any of the above embodiments, and, if it is determined that the biometric feature is no spoof, identifying the user using the biometric feature.

The biometric feature of a user can comprise, for example, fingerprints, the foot, the palm, the face or part of the face, the iris or pigments of the iris and the voice of the user. Generally, any biometric feature that individualizes a person in a way that this biometric feature can be captured on data including an image, a video and audio data is intended to be encompassed by the biometric feature according to this embodiment.

With this computer-implemented method, a reliable identification of spoofs of biometric features is achieved as the used spoof-detection systems are trained to identify (disjoint) characteristics in the obtained data so that the user is freed from particular requirements regarding how to present his biometric feature while at the same time the system is more robust with respect to deteriorations or noise in the obtained data so that the identification accuracy is high.

Furthermore, according to the present disclosure, a system is provided that comprises a sensor for obtaining data comprising audio data and/or 2D and/or 3D images and/or videos, a processor and memory comprising instructions that, when executed by the processor, cause the processor to perform the computer-implemented method according to the above embodiment.

With this system, reliable identification of users using biometric features of almost arbitrary kind is achieved.

### Brief description of the drawings

- Figure 1: shows a flowchart of a method for training a spoof-detection system as is known from the prior art.
- Figure 2: shows a flowchart of a computer-implemented method for jointly training at least two different spoof-detection systems according to one embodiment.
- Figure 3: shows a schematic depiction of a data set used for jointly training at least two different spoof-detection systems.
- Figure 4: shows a schematic depiction of a system comprising a sensor for obtaining data according to one embodiment.

### Detailed description

As explained previously, with the use of mobile devices like smartphones in everyday life, the protection of and access to restricted, particularly personal data like online banking logins or access to social media platforms changed from entering usernames and passwords to using biometric features like fingerprints or the face or eye of a user to identify the user.

For this purpose, algorithms using classifiers or neural networks can be employed that require training to, on the one side, identify the biometric feature (the fingerprint or the shape of the face or the pigments in the iris, for example) in received data like an image or a video stream. On the other side, due to the exchange of not necessarily encrypted data like images that carry the biometric feature, it is possible for a malicious attacker to use previous data to attempt to get access to personal data of a user. This can encompass, for example, using an image of a biometric feature of a user or an artificial reconstruction of the voice of the user to break the encryption or protection of data by the biometric identification.

In order to prevent such malicious attacks, it is known in the art to provide so-called spoof-detection systems that can determine whether the data received (for example, an image or a video or audio data comprising a biometric feature) constitutes the real object (i.e. the feature of a user) or constitutes a spoof. For example, such systems can be provided to determine whether the user that attempts identification indeed holds his finger in front of the camera or whether what is held in front of the camera is an image of the finger. This is done by processing the data received (for example, the image) and deriving therefrom with some likelihood or accuracy whether the received data can be assumed to be genuine or real data belonging to a real object or data belonging to a spoof of the real object.

In the context of the present disclosure, while reference will be made to real objects or spoofs of such real objects, it is noted that biometric features are not restricted to physical objects but can also comprise, for example, recordings of the voice of a user, which as such does not have a particular physical shape. These will nevertheless be understood in the following as "objects".

Spoof-detection systems that are designed to detect particular spoofs in images or videos or audio signals are known. These make use of particular classifiers or neural networks or other algorithms that usually have to be trained before they can be used to reliably identify any spoofs of objects.

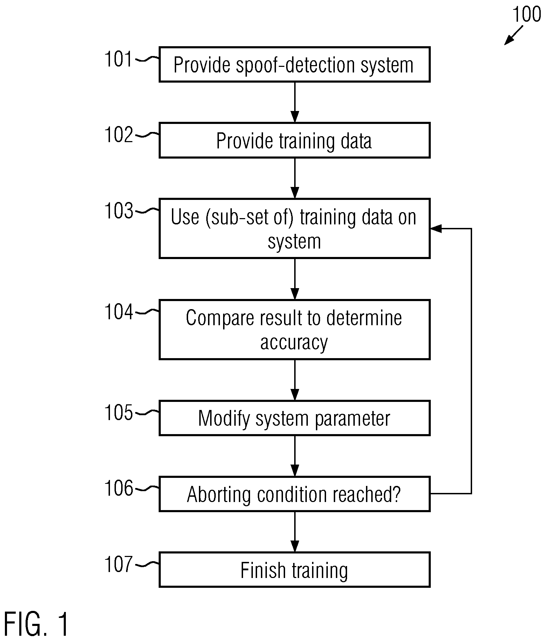

Such training is generally known to the skilled person and a brief example is shown in the flowchart according to figure 1.

The training method of figure 1 begins in steps 101 and 102 by providing a spoof-detection system that usually is untrained in step 101 and by providing training data to train the spoof-detection system in step 102. As an example, a spoof-detection system can be thought of that is intended to identify whether an obtained image is an image of a real physical object (like a finger) or whether the obtained image is an image of an image held in front of, for example, the camera taking the image. It may be assumed that the object is a finger or other object carrying a biometric feature. The latter image would be a spoof (because it does not constitute an image of the object itself but an image of an image of the object), whereas the first case constitutes the real object which could be used for identifying a user.

The training data will consequently comprise a mixture of images of real objects (i.e. images of the real finger) and spoofs of the real objects like images of images. Additionally, the training data will comprise or will be accompanied by spoof-indicative information for each image in the training data. This spoof-indicative information indicates whether the image constitutes a spoof or an image of the real object.

In step 103, at least a portion or sub-set of the training data provided in step 102 is used on the spoof-detection system. This usually encompasses that the spoof-indicative information associated with each image is not forwarded to the spoof-detection system, but only the images are used on the spoof-detection system. In step 103, the spoof-detection system processes each received image of the sub-set of the training data and provides an output that can, for example, be or comprise a binary decision specifying whether the spoof-detection system considers a particular image in the training data to constitute a spoof of the real object or an image of the real object.

In a next step 104, the results of step 103 are compared to the spoof-indicative information referred to above to determine, for each image that was used in step 103, whether the spoof-detection system correctly identified the spoof or the real object. Step 104 can for example, comprise applying a loss function to determine a penalty for wrong identifications of real objects or spoofs and/or a reward for correct identification.

In step 105, based on the results of step 104, at least one parameter of the spoof-detection system can be modified. For example, a parameter associated with a node of a neural network can be changed by a given amount in a particular direction. Determining amount and/or direction can be done in many ways that are generally known to the skilled person by using, for example, gradient techniques or gradient descent techniques to determine both the direction and amount of the required change for the parameter to preferably increase the accuracy of identification in the next training cycle.

In a subsequent step 106 (which can also take place before the step 105) a determination can be made whether or not an aborting condition for the training has been reached. This can, for example, be a required accuracy throughout the used training data or a required accuracy that is obtained with the parameters of the spoof-detection system for a validation data set that has not been used during training, or the aborting condition can, for example, be a number of repetitions of training cycles. If this aborting condition is reached, the training can be finished in step 107. If the aborting condition is not reached, the training method can return to step 103, where either a new sub-set of training data (this can be the same sub-set again or a different sub-set) is used on the system or the same sub-set of training data is used on the system or the whole training data is used on the system again, repeating the subsequent steps until the aborting condition is reached.

The result of the training method according to figure 1 is a spoof-detection system that is particularly trained to identify or distinguish between real objects and spoofs of the real object of a given kind. For example, the spoof-detection system can particularly be trained to identify whether images received show the real object or a spoof of the real object as explained above.

The training result is thus a specialized spoof-detection system that can accurately identify a particular spoof. However, the spoof-detection system will fail when either other spoofs or other data are provided by a user that do not meet the expectations of the spoof-detection system.

While it is in principle possible to overcome this shortcoming by providing several trained spoof-detection systems, this results in an increased resource consumption for training such spoof-detection systems, not only with respect to the required training time, but also with respect to providing sufficient training data to each of the spoof-detection systems. This is particularly because the training data for a specific spoof-detection system must be particularly designed. For example, a spoof-detection system that is intended to detect spoofs of fingers or faces has to be provided with training data that shows the respective fingers or faces and spoofs thereof.

Consequently, there is a need for providing a training method of spoof-detection systems that is more efficient and at the same time results in a reliable identification of spoofs while reducing the requirements regarding the input that has to be provided by a user.

According to the disclosure of the present invention, there is provided a method for jointly training a plurality of (at least two) spoof-detection systems, preferably simultaneously using a single data set for the training on all spoof-detection systems. This inventive method results in reduced front load of the training method because the training data does not need to be manually separated for the specific spoof-detection systems. Additionally, as the spoof-detection systems are jointly trained, knowledge of the training results of the different spoof-detection systems can be used to improve the training progress of each of the spoof-detection systems. Thereby, also the time required for training is reduced while also increasing the accuracy with which the combination of spoof-detection systems can identify spoofs.

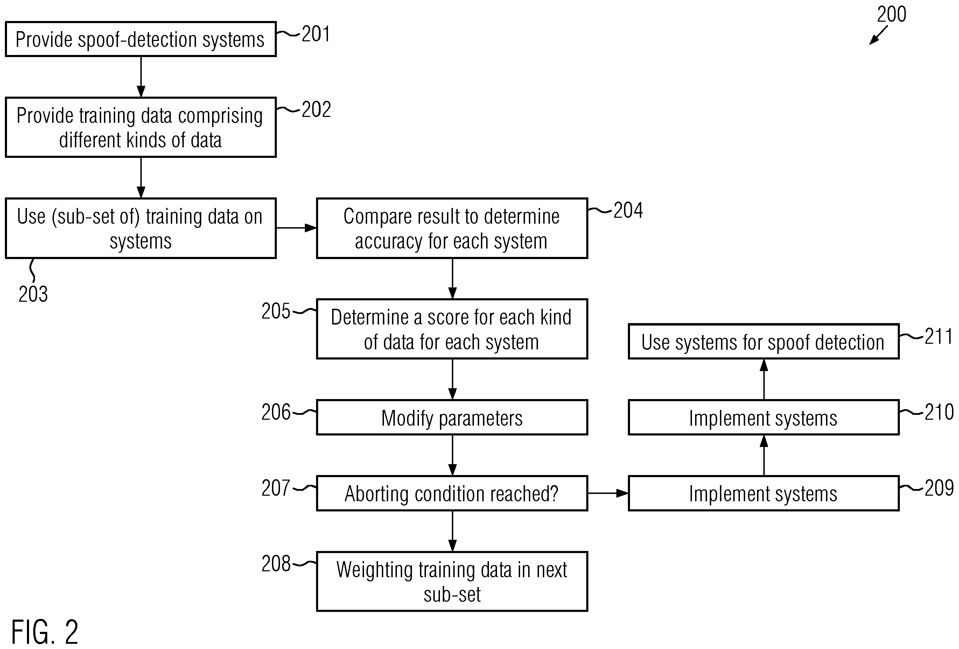

A flowchart of a computer-implemented method according to one embodiment of the invention is shown in figure 2.

The computer-implemented method 200 begins with a step 201 and a step 202 where in step 201 spoof-detection systems are provided and in step 202 training data comprising different kinds of (training) data are provided. There is no particular timely order of the steps 201 and 202 and, for example, the training data could also be provided or made available before the particular spoof-detection systems are specified or provided in step 201.

The spoof-detection systems are preferably all pairwise disjoint, meaning that each spoof-detection system is intended for identifying a kind of spoof that is different from the kind of spoof another spoof-detection system of the plurality of spoof-detection systems is intended to identify. For example, a first spoof-detection system can be provided to identify whether images of a finger show the real finger or a spoof of the finger. Another spoof-detection system can be provided that is designed to determine whether a video of an object like a finger or a face shows the real object or only a spoof of the object, for example by artificially creating the video. A further spoof-detection system can be designed to, for example, identify spoofs in audio recordings or generally audio data. While it is generally possible that the spoof-detection systems only differ with respect to the kind of data they process (particularly, the data type like an image, a video or an audio signal) it can also be provided that the different spoof-detection systems differ with respect to the kind of information in the same data type they are able to process. For example, there can be a first spoof-detection system that is intended to identify fingers or spoofs of fingers, whereas a second spoof-detection system is intended to identify faces or spoofs of faces, or the like.

In the context of the present disclosure, the spoof-detection systems can be pre-trained systems so that they have run through at least one training cycle as the one discussed in relation to figure 1 separate from the other spoof-detection systems. However, the invention also encompasses untrained spoof-detection systems that are only provided with a particular architecture that, for example, restricts the type of data (images or video or audio, for example) that can be processed by the respective spoof-detection systems.

The invention is consequently not particularly limited towards the differences between these spoof-detection systems or their intended application and in general is intended to cover all cases where spoof-detection systems somehow differ with respect to the kind of spoofs they are intended to identify and/or the kind of data they are intended to process.

The spoof-detection systems provided in step 201 can comprise different architecture. In general, the spoof-detection systems can comprise one or more classifiers or one or more neural networks that can process received information like images and, by processing them, can provide at least an output indicative of whether or not the respective spoof-detection system identifies a spoof or a real object. Additionally, it can also be provided that the spoof-detection systems are adapted to obtain spoof-related information from the data received and processed. Such spoof-related information can, for example, comprise an estimation of the position of the object for which spoof identification is to be performed within a given image. For example, if the spoof-detection system is intended to distinguish between spoofs and real fingers, the spoof-detection system can provide as output coordinates of a bounding box relative to the coordinates of the image where the coordinates of the bounding box at least approximately indicate the position of the finger as identified by the spoof-detection system.

The invention is, however, not limited to a particular output or kind of output being provided by the spoof-detection systems and the output of different spoof-detection systems can also differ and does not necessarily have to be the same.

The training data provided in step 202 preferably is a single data set. Such single data set may for example be provided in a single data structure or may be stored in a specific location. The data set is not limited in this respect. However, according to the invention, the single data set comprises all data that is used for training all spoof-detection systems according to the method 200.

It is intended that the single data set comprises training data of at least two different kinds. For example, the kinds of training data can differ with respect to the type of data. A first type of training data can for example comprise images whereas a second type of training data can comprise videos and/or audio signals. A single type of data (for example, video data) can also be separated when providing the single data set into different types of training data where the first type of training data is the video stream or a portion thereof whereas a second kind of training data is one or more frames of the video so that the second type of training data constitutes images whereas the first type of training data constitutes moving images in the form of a video stream.

Alternatively or additionally, a first type of training data obtained from a video stream can also be the video stream itself without audio whereas a second type of training data can be the audio data associated with the video stream.

Alternatively or additionally, the different kinds of data can be related to different properties of a single type of data provided in the single data set. For example, the type of data can be images where the images show different objects and spoofs thereof. A first number of images can show fingers or the like objects whereas a second number of images shows faces or eyes of a human. The first kind of data would then be the fingers whereas a second kind of data would be the faces so that the different kinds of data do not differ with respect to the type of data but differ with respect to properties or information of the particular type of data.

Also, combinations of the above described embodiments can be provided where the single data set comprises both different types of data and within each type of data different training data exhibiting different properties.

The training data that forms the single data set can, for example, be obtained from commonly available databases where audio signals or images or videos or such kind of data that can be spoofed can be obtained. The spoofs can either be generated therefrom by modifying the underlying data or by likewise using publicly available sources of objects that can be used to act as spoofs for training the spoof-detection systems. For example, the Internet can be searched for images of real objects within images that exhibit characteristics of such spoofs.

In the next step 203, at least a sub-set of the training data is used on all spoof-detection systems. This sub-set of training data preferably comprises different kinds of training data so that, for example, images showing different objects for spoof detection like fingers or faces or images and videos and/or audio signals are provided in one, preferably each sub-set of the training data and each of the spoof-detection systems processes all data within the sub-set of the training data in step 203. This can be seen as a first training cycle where the training data is not particularly weighed depending on specific characteristics of the spoof-detection systems and the first training cycle will usually result in results of the spoof-detection systems that have substantially varying quality of spoof detection, particularly when some data in the sub-set of the training data used in step 203 cannot reasonably be processed by a particular spoof-detection system. This will be taken into account in the further training process as described in the following.

In any case, each spoof-detection system provides a result of processing the sub-set of training data in step 204 and this result is compared to results that should have been determined by the spoof-detection systems, for example by comparing the results to spoof-indicative information associated with the data set.

These results can comprise, for example, binary decisions regarding whether or not a spoof is present or a particular classification of which kind of spoof is detected in each item of the sub-set of training data. Alternatively or additionally, it can also be provided that spoof-related information as discussed above is determined by the spoof-detection systems and also the accuracy of this determined spoof-related information can be determined in step 204. For binary results like whether a spoof is present or not, the accuracy can also be determined not only for each item in the training data, like for example each image, but also an overall accuracy of spoof detection of the particular spoof-detection system can be determined. For example, if the sub-set of training data used in step 203 comprises 1,000 different data items like images and video or audio scenes, an overall spoof detection accuracy can be determined by the ratio of correct detections divided by the total number of items in the sub-set of training data.

The accuracy can be determined for each spoof-detection system and each item in the sub-set of training data using commonly known loss functions.

Based on the determined accuracy in step 204, for each spoof-detection system and each kind of training data in the sub-set, a score is determined in step 205 that preferably is indicative of the accuracy determined in step 204. The score can be a single value or number, for example ranging from 0 to 1, where 0 may indicate no accuracy at all and 1 may indicate perfect accuracy.

The accuracy could, for example, also be linked to or be identical to the output of the spoof-detection system. For example, if the spoof-detection systems determine a likelihood for a particular sample in the sub-set of training data being a spoof, then this likelihood or probability can be compared to the reference data used in the training. If the output indicates no spoof whereas a spoof should have been detected (or the other way around), then a value 0 (or 1) can be associated with this sample in the sub-set of training data. The score can then for example be set to the sum (or averaged sum, or average, or mean value) of all scores of all samples (for example images) in the sub-set of training data.

This results in a plurality of scores that could for example be represented in the form of a data structure having the shape of a matrix. The rows indicate the spoof-detection system and the columns indicate the kinds of training data or vice versa and the entries in the matrix are the scores determined.

In a next step 206 which can either be performed in parallel to step 205 or before or after that step 205, parameters of the spoof-detection systems can be modified. This modification can comprise for example using gradient descent techniques as known in the art to modify parameters of these spoof-detection systems, like parameters of the neural networks or classifiers to improve their detection results of a particular kind of data. Modifying the parameters can either be done independent from the scores determined in step 205 or it can be done taking into account the scores determined in step 205 at least for a particular spoof-detection system and the kinds of data. For example, if the score for a particular kind of data indicates that a particular spoof-detection system was not at all able to reasonably determine whether a spoof was presented or not, the parameters can be modified without taking into account this kind of data and the comparison results determined in step 204 for this kind of data.

After modifying the parameters in step 206, it can optionally be checked whether an aborting condition was reached in step 207 indicating that the training should be aborted. The aborting condition can, for example, comprise a preset number of training cycles that have been performed for training these spoof-detection systems. This number can, for example, be determined based on the number of sub-sets of training data and/or an intended amount of repetitive use of the same training data or the like. It can also be a fixed number of training cycles, for example, 1,000 or 10,000 or the like, independent of the size of the training data. If this predetermined number is reached, the training can be finished in step 209.

The aborting condition may alternatively be a dynamic condition which, for example, depends on the training progress. The aborting condition can, for example, comprise that a change in the parameters modified in step 206 compared to the modification of the parameters in a preceding step is below a particular threshold. This can indicate that the spoof-detection systems assume or are sufficiently close to assume a steady state where further training does not provide any (substantial) improvement of the training result or the obtained accuracy of spoof-detection. For example, the threshold can be set to 1% or 0.25% with respect to the absolute or relative change of the parameters in the current training cycle compared to a previous training cycle. If the change of parameters is below this threshold, the training can likewise be aborted or finished in step 209.

If the aborting condition is not fulfilled in step 207, a next sub-set of training data is prepared in step 208. This sub-set of training data is however, in contrast to the first training cycle weighed before it is processed by the spoof-detection systems. This weighing can, for example, comprise associating a number between 0 and 1 for each spoof-detection system with a specific kind of data. For example, a kind of training data that was more or less correctly processed by a spoof-detection system in a preceding training step can be given more weight compared to training data that was not at all reliably determined or processed by the particular spoof-detection system.

In one embodiment, the weight of a particular kind of training data for a particular spoof-detection system can solely be based on the score previously determined for this kind of training data for this particular spoof-detection system. Using the above example how the scores can be represented in the data structure, this means that the weight associated with the particular kind of training data for the particular spoof-detection system solely is a function of the particular entry in the matrix. However, in an alternative embodiment, it can also be provided that the weight for a particular kind of training data for a particular spoof-detection system depends on all scores determined for this particular kind of training data for all spoof-detection systems and/or on all scores determined for all kinds of training data for this particular spoof-detection systems and/or on all scores determined. Thereby, it is possible to determine the weight for this specific kind of training data not only depending on the behavior of a specific spoof-detection system, but also based on the accuracy with which other spoof-detection systems have processed this kind of data and/or based on the accuracy with which the particular spoof-detection system has identified spoofs in other kinds of training data.

For a given spoof-detection system, for example, that correctly processed a specific kind of training data with a given accuracy, there may be other spoof-detection systems that performed even better and correspondingly receive higher scores for this kind of data. The weight for the spoof-detection system for this particular kind of training data can then be set less compared to the spoof-detection systems that performed even better. With this, it is also possible to specialize a plurality of spoof-detection systems concurrently by determining the weights depending on the accuracy of all spoof-detection systems. This can allow for training a plurality of spoof-detection systems on the same kind of training data, but specialized to particular characteristics of this training data. For example, assuming that the kind of training data is images of fingers, there can be a first spoof-detection system that can reliably distinguish spoofs from the real objects under normal illumination conditions without any flashlight being used, whereas other spoof-detection systems perform better if flashlight is used. All of these spoof-detection systems can be given comparatively high weights for this kind of data (images showing fingers), but will in the subsequent training particularly specialize on those characteristics of the images for which the systems perform best.

Having weighed the training data of a new sub-set in step 208, the method then proceeds with using this weighed sub-set of training data in step 203 so that a next training cycle is executed until finally the aborting condition is reached in step 207.

In embodiments of the present, it is also possible to provide particular samples in the sub-sets of training data depending on the associated weights of the sub-sets of training data to respective spoof-detection systems. For example, assume two spoof-detection systems that exhibit different scores for a particular type of training data where one spoof-detection systems performs better than the other and consequently can, for example, have a higher score associated with a particular type of training data. In a further training cycle in step 203, it can then be provided that the particular type of training data is used for training only the spoof-detection system that performs better whereas for the other spoof-detection system, this particular type of training data is not used in the next training cycle.

This can, for example, be achieved by setting a threshold value. For each kind of training data in a sub-set of training data, a score is determined for each spoof-detection system. Using the weighted sub-set of training data in a next training cycle can then comprise providing particular kinds of training data in the sub-set of training data only to those spoof-detection systems that achieved scores for this particular kind of training data in the or a previous training cycle above the threshold value. In this way, all spoof-detection systems are trained with the same (global) training data in each cycle while allowing and even ensuring that the spoof-detection systems specialize on the training data on which they perform best.

It is noted that the weights can also be used in step 206 to determine the impact of particular kinds of training data on the modification of parameters of a particular spoof-detection system, so that the training is forced towards parameter modifications based on those kinds of training data for which the spoof-detection system is determined to perform best. Insofar, the weighting of training data does not necessarily require that the training data itself is associated with weights for the next training cycle, but it can also alternatively or additionally be envisaged to control the impact of training data of a particular kind on the modification of the parameters of a spoof-detection system by weighting the result of the processing in steps 203 and 204.

Having trained the spoof-detection systems and finished the training in step 209, it can be provided according to one embodiment of the invention that the spoof-detection systems or a real sub-set of these spoof-detection systems is implemented on a system, for example by means of installing an application to execute a computer-implemented method for identifying a user. This application can, for example, be an application for identifying a user using a biometric feature on which at least one of the spoof-detection systems have been trained to identify spoofs of this biometric feature. Preferably, the use of different biometric features is allowed, so that the user can, for example, use images of his finger or face or videos thereof or audio sequences of his speech to identify himself at will without being restricted by the application regarding the biometric feature chosen. By implementing a spoof detection that uses several jointly trained spoof-detection systems, the identification accuracy is increased while freeing the user from constraints with respect to how he or she has to identify himself.

In a step 211, the computer-implemented method can be used to determine, for example, as part of an identification process of a user, whether the obtained data comprising a biometric feature is a spoof or represents the real biometric feature. If it is determined that the obtained data/the biometric feature shown is no spoof, the user can be identified using the obtained data comprising the biometric feature.

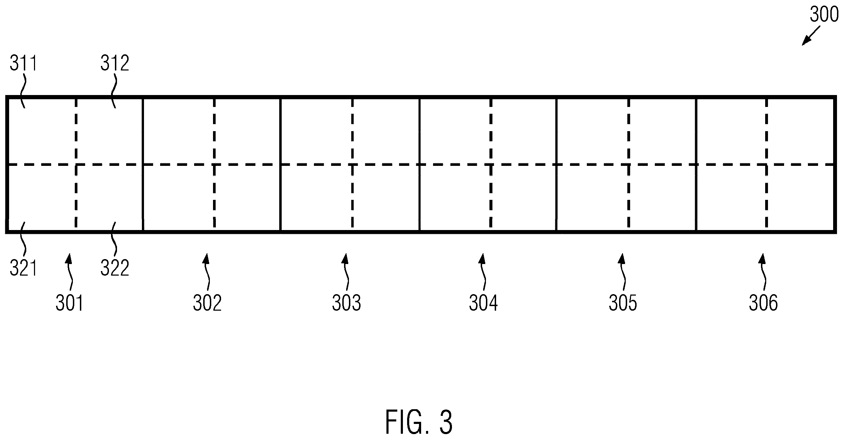

Figure 3 shows a schematic depiction of a data set of training data 300 that was already explained in relation to figure 2.

The data set 300 comprises a plurality of sub-sets 301 to 306. These sub-sets can be predefined, for example, by separating the data set into equally large numbers of data items where each data item can, for example, comprise a single image or video or frame or portion of an audio file or generally a particular data item of a particular kind of training data. It can also be provided that the sub-sets are dynamically determined by, for example, randomly selecting a number of data items in the data set 300 before each training cycle. Though six sub-sets are shown in figure 3 that do not overlap (i.e. do not have samples in common) it can be provided that the sub-sets at least partially or even completely overlap (i.e. are identical or at least comprise one or more identical samples). Furthermore, the invention is not restricted to six sub-sets but any number of sub-sets from 1 (the training data constitutes the sub-set apart from an optional validation set) to several ten or several 100 sub-sets is envisaged.

As is known from training of classifiers and neural networks, it can be provided that at least one sub-set of the data set 300, for example, the sub-set 306, is not used during the training cycles for training, but is used as a validation sub-set. This validation sub-set can be used to process its data after each or at least one training cycle discussed in relation to figure 2 to see how good the spoof-detection systems process data that is unknown from the training to prevent bias during the training towards only those patterns in the data set that are already known to the spoof-detection systems through training. To create a reference data set that is compared with the predictions of the spoof-detection systems during a training cycle, the training data set can be labeled as is generally known to the skilled person. This labelling can also be provided for the validation sub-set. While the validation sub-set is not used during training cycles, the reference data set is used in the training cycles.

Each of the sub-sets preferably comprises at least two different kinds of training data 311 and 312. These different kinds of training data can, for example, be images or videos or audio signals, and can thus be of different types. The different kinds of training data can also be of the same type, but associated with different properties, as already discussed above.

Furthermore, in a preferred embodiment, it can be provided that each sub-set comprises training data associated with real objects. These are denoted as training data 311 and 312. Additionally, each sub-set can comprise spoofs of the real objects 321 and 322 for each kind of training data so that, in each training cycle, the spoof-detection systems are preferably trained on both real objects and spoofs of the real objects.

Preferably, each sub-set of the training data comprises at least one item of data of each kind of training data, so that with each training cycle, the spoof-detection systems are trained on all kinds of training data.

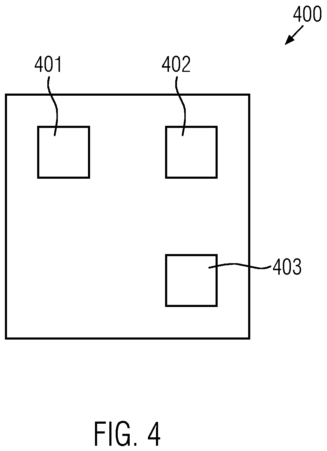

Figure 4 shows a schematic depiction of a system 400 on which the spoof-detection systems can be implemented for spoof detection. The system 400 can for example be a smartphone or other mobile device like a laptop or tablet. The system 400 can comprise a sensor 401 for obtaining data. The data can comprise audio data and/or two-dimensional and/or three-dimensional images and/or videos or any other kind of data that can be associated preferably with a biometric feature of a user that wants to identify himself using the biometric feature. The sensor in this context can for example be a camera, particularly a 2D camera or a 3D camera potentially associated with a microphone to obtain data of varying types. The sensor can also only comprise a microphone.

The system further comprises a processor 402 and associated memory 403. The memory can comprise instructions that when executed by the processor 402 cause the processor to perform the computer-implemented method according to steps 210 and 211 of figure 2.

Thereby, using the system, a user can identify himself using a variety of potential biometric features while achieving high identification accuracy by using the jointly trained spoof-detection systems.

## Claims

1. A computer-implemented method for jointly training at least two different spoof-detection systems using a single data set, the single data set comprising at least two sub-sets of training data, wherein each sub-set comprises at least two different kinds of training data, the method comprising:
- training, in a first training cycle, the at least two different spoof-detection systems using a first sub-set of training data
- determining, based on a result of the training, for each of the at least two different spoof-detection systems, a score for each of the at least two different kinds of training data in the first sub-set of training data
- weighting, based on the scores, each kind of training data in a second sub-set of training data to obtain weighted training data
- training, in a subsequent training cycle, the at least two different spoof-detection systems using the weighted training data.

2. The computer-implemented method according to claim 1, wherein the score is indicative of a spoof-identification accuracy of the spoof-detection system for the kind of training data.

3. The computer-implemented method according to claim 1 or 2, wherein the single data set comprises one type of data and the different kinds of data are different properties of the type of data; or
wherein the single data set comprises different types of data and each different kind of data is a different type of data.

4. The computer-implemented method according to any of claims 1 to 3, wherein training, in the first training cycle and/or the second training cycle, comprises simultaneously training the at least two different spoof-detection systems.

5. The computer-implemented method according to any of claims 1 to 4, wherein each training cycle comprises modifying at least one parameter of at least one spoof-detection system.

6. The computer-implemented method according to any of claims 1 to 5, wherein the steps of determining, weighting and training, in a subsequent training cycle, are repeated a predetermined number of times or until a steady state of all spoof-detection systems is reached.

7. The computer-implemented method according to any of claims 1 to 6, wherein weighting comprises comparing the at least one score against a threshold value and, if the score is above the threshold value, determining a weight for the kind of training data and/or if the score is below the threshold value, setting a weight for the kind of training data to 0.

8. The computer-implemented method according to claim 7, wherein the score comprises a first sub-score indicative of an identification accuracy of a spoof and a second sub-score indicative of an identification accuracy of spoof related information.

9. The computer-implemented method according to any of claims 1 to 8, wherein the at least two spoof-detection systems are pre-trained on at least one kind of training data.

10. The computer-implemented method according to claim 9, wherein each of the at least two spoof-detection systems is pre-trained on a kind of training data that is different from the kind of training data on which a different spoof-detection system is pre-trained.

11. The computer-implemented method according to any of claims 1 to 10, wherein weighting comprises determining a weight for each kind of training data as a function of all scores.

12. The computer-implemented method according to any of claims 1 to 11, wherein the spoof-detection systems comprise at least one of an algorithmic classifier, a neural network for detecting spoofs.

13. The computer-implemented method according to any of claims 1 to 12, wherein the scores are stored in an LUT.

14. A computer-implemented method for identifying a user, the method comprising obtaining data comprising a biometric feature of the user, processing the data to determine whether the biometric feature is a spoof using a spoof detector comprising at least two spoof-detection systems trained according to the computer-implemented method according to any of claims 1 to 13, and, if it is determined that the biometric feature is no spoof, identifying the user using the biometric feature.

15. A system comprising a sensor for obtaining data comprising audio data and/or 2D and/or 3D images and/or videos, a processor and memory comprising instructions that, when executed by the processor, cause the processor to perform the computer-implemented method according to claim 14.
